Europäisches Patentamt

European Patent Office

Office européen des brevets

(11) Publication number: **0 163 524**
**B1**

(12) **EUROPEAN PATENT SPECIFICATION**

(45) Date of publication of patent specification: **24.05.89**　(51) Int. Cl.⁴: **F 16 F 7/12**

(21) Application number: **85303767.9**

(22) Date of filing: **29.05.85**

(54) **Energy absorption.**

<table>
<tr><td>(30) Priority: <b>29.05.84 GB 8413692</b></td><td>(73) Proprietor: <b>BTR plc<br>Silvertown House Vincent Square<br>London SW1P 2PL (GB)</b></td></tr>
<tr><td>(43) Date of publication of application:<br><b>04.12.85 Bulletin 85/49</b></td><td></td></tr>
<tr><td></td><td>(72) Inventor: <b>Pentelow, Tony<br>Tinkley Farm Bungalow Tinkley Lane<br>Nympsfield Stonehouse, Gloucestershire (GB)</b></td></tr>
<tr><td>(45) Publication of the grant of the patent:<br><b>24.05.89 Bulletin 89/21</b></td><td></td></tr>
<tr><td>(84) Designated Contracting States:<br><b>AT BE DE IT NL SE</b></td><td>(74) Representative: <b>Hinton, Alan Horace et al<br>BTR Group Patent & Trade Mark Service P O Box<br>504<br>Erdington Birmigham B24 9QH (GB)</b></td></tr>
<tr><td>(56) References cited:<br><b>EP-A-0 055 364<br>FR-A-2 162 741<br>FR-A-2 389 045<br>GB-A-2 020 780<br>GB-A-2 088 522<br>GB-A-2 134 211<br>JP-A-59 081 253<br>JP-A-59 084 667<br>US-A-3 633 934<br>US-A-3 865 418</b><br><br><b>PATENTS ABSTRACTS OF JAPAN, vol. 8, no. 195 (M-323)1632r, 7th September 1984; & JP - A - 59 84 667 (MITSUBISHI DENKI K.K.) 16-05-1984</b></td><td>(56) References cited:<br><br><b>PATENTS ABSTRACT OF JAPAN, vol. 8, no. 191 (M-322)1628r, 4th September 1984; & JP - A - 59 81 253 (MITSUBISHI DENKI K.K.) 10-05-1984</b></td></tr>
</table>

Courier Press, Leamington Spa, England.

# EP 0 163 524 B1

**Description**

This invention relates to a method and apparatus for dissipating energy.

One known proposal for an energy absorbing device (GB—2088522 from which the features of the precharacterising part of claims 1 and 2 are known) comprises an elastomeric rod contained within a cylinder and arranged to be engaged by a 'penetrator' to which a high energy force may be applied so as to cause the penetrator to shear through the elastomer and thereby absorb energy.

According to one aspect of the invention there is provided a method of dissipating energy from a moving mass using an energy absorbing device which comprises a sacrificial member of plastics material and a rigid element which has a higher shear strength than said plastics material and which, when a moving mass impinging on the device causes the device to fail, is caused to shear through the sacrificial member, the material of the sacrificial member being chosen such as to ensure that when failure of the device occurs, the mode of failure is by said shearing of the rigid element through the sacrificial member, characterised in that the sacrificial member is of fibre reinforced plastics material forming at least one of a pair of nesting tubes through which a transverse hole is provided, said hole receiving a rigid element of higher shear strength than that of at least one of the tubes whereby the mode of failure is by shearing of the rigid element through at least the said one tube.

The invention also provides apparatus for dissipating energy from a moving mass comprising a sacrificial member of plastics material and a rigid element which has a higher shear strength than said plastics material and which, when a moving mass impinging on the apparatus causes the apparatus to fail, is caused to shear through the sacrificial member, the material of the sacrificial member being chosen such as to ensure that when failure of the device occurs the mode of failure is by said shearing of the rigid element through the sacrificial member, characterised in that the sacrificial member is of fibre reinforced plastics material forming at least one pair of nesting tubes through which a transverse hole is provided, said hole receiving a rigid element of higher shear strength than that of at least one of the tubes whereby the mode of failure is by shearing of the rigid element through at least the said one tube.

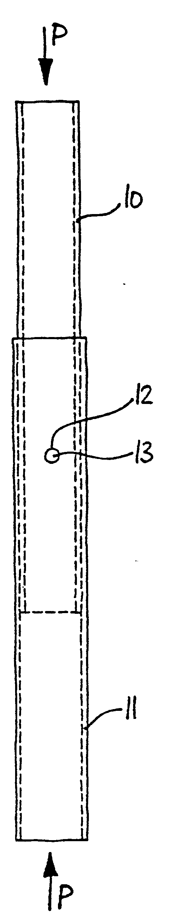

By way of example, an embodiment of the invention and various alternatives thereof will now be described with reference to the accompanying drawing, which is a side view of an energy absorbing device according to the invention.

The device shown in the drawing is a telescopic strut designed for absorbing energy from an axial compressive loading P, although equally, it could absorb energy from an axial tensile loading. The strut comprises a pair of nesting tubes 10 and 11, through which there is drilled a transverse hole 12 in which there is drilled a transverse hole 12 in which there is received a pin 13. The tubes are of circular cross section here, but of course any other suitable cross-section could be used, for example, square which would prevent relative rotation between the tubes. The pin 13 is designed to be of stiffer material than that of at least one of the tubes so that when the strut is forced to give way under an axial compressive loading P, such as from an impact, it is the tube material which fails, rather than the pin. What happens, therefore, is that the stiffer pin 13 shears through the weaker tube material, acting as it does so to dissipate at least some of the energy of the impact.

The sacrificial material of the tube which is used here is fibre reinforced plastics. The plastics material can be a resin such as polyester, epoxy or phenolic resin, and may be thermoplastic or thermosetting. The fibre reinforcement may comprise glass fibre, for example, or carbon fibre or "Kevlar", and may be incorporated in the plastics material in the form of unidirectional fibres, fineweave cloth, woven rovings, chopped strand mat, continuous filament mat, etc., and of course any combination of these may be included. The material may be formed by a pultrusion process, in which case the fibre reinforcement is preferably predominantly made of unidirectional glass fibres which are aligned in the direction of pultrusion. In the case of the nesting tubes shown in the drawing, the fibre alignment and direction of pultrusion are axial, as is the intended direction of shear. The material may alternatively be formed into tubes by a process of winding on a mandrel, in which case the fibre reinforcement is conveniently of the cloth wound type, preferably with one of the fibre weaves orientated in the direction of the axis of the tube. Tubes made by winding have a laminated sort of construction and have been found in practice to be capable of absorbing more energy than corresponding tubes which are pultruded. It is also found in practice that, apart from a localised destruction of the tube material where it has been sheared through, the remainder of the tube appears unaffected. This means that in the case of the telescopic strut shown in the drawing, the strut is able to retain its integrity even after an impact. Naturally, it is important that the device fails in the intended manner, namely, by shearing of the plastics material. Where the device is a telescopic strut, as shown in the drawing, this means that the material must have sufficient bending and crippling mode strength to prevent failure by buckling. The fibre reinforcement is selected to ensure this, and this usually means that there are at least some fibres which are aligned in the intended direction of shear. Preferably at least half the fibres in the reinforcement are aligned in the direction of shear or are inclined to said direction by an angle of no more than 45°. The plastics material composition is selected to suit the environmental conditions of the particular application in which the device is to be used. The telescoping nature of the strut ensures the necessary means to constrain shearing to the required direction.

Trials have been carried out on samples of round and square section telescopic tubes as shown in the drawing, using various materials, tube sizes and pin sizes, and the following is a summary of results:

2

| SAMPLE NO. | TUBE SHAPE | OUTER DIMENSION OD TUBE | | TUBE WALL THICKNESS | | MATERIAL | | PIN DIA. | INITIAL PEAK (kN) | SUBSEQUENT kN | |
|---|---|---|---|---|---|---|---|---|---|---|---|
| | | (OUTER) | (INNER) | (OUTER) | (INNER) | (OUTER) | (INNER) | | | (MAX) | (MIN) |
| 1. | SQUARE | 32 | 25. | 3 | 3 | H | H | 6 | 5.6 | 3.8 | 2.6 |
| 2. | SQUARE | 38 | 32 | 3 | 3 | H | H | 6 | 4.6 | 4.3 | 3.0 |
| 3. | SQUARE | 38 | 32 | 3 | 3 | H | H | 8 | 7.0 | 5.7 | 4.4 |
| 4. | SQUARE | 38 | 32 | 3 | 3 | H | H | 10 | 7.0 | 7.6 | 5.9 |
| 5. | SQUARE | 38 | 32 | 3 | 3 | H | H | 12 | 9.3 | 7.7 | 5.7 |
| 6. | ROUND | 32 | 25 | 3 | 3 | H | H | 6 | 6.0 | 3.5 | 2.7 |
| 7. | ROUND | 38 | 32 | 3 | 3 | H | H | 6 | 4.1 | 3.6 | 1.8 |
| 8. | ROUND | 51 | 44.5 | 3 | 3 | H | CW | 6 | 6.6/7.6 | 7.0/4.6 | 5.7/3.9 |
| 8a. | ROUND | 51 | 44.5 | 3 | 3 | H | CW | 8 | 8.7/6.5 | 6.1/6.0 | 4.4/3.0 |
| 8b. | ROUND | 51 | 44.5 | 3 | 3 | H | CW | 10 | 7.7/10.0 | 6.3/6.6 | 4.6/4.6 |

| SAMPLE NO. | TUBE SHAPE | OUTER DIMENSION OD TUBE | | TUBE WALL THICKNESS | | MATERIAL | | PIN DIA. | INITIAL PEAK (kN) | SUBSEQUENT kN | |
|---|---|---|---|---|---|---|---|---|---|---|---|
| | | (OUTER) | (INNER) | (OUTER) | (INNER) | (OUTER) | (INNER) | | | (MAX) | (MIN) |
| 9. | ROUND | 32 | 25 | 3.05 | 2.95 | HR | CW | 6 | 5.8/5.3 | 3.2/3.6 | 2.5/3.0 |
| 9a. | ROUND | 32 | 25 | 3.05 | 2.95 | HR | CW | 8 | 6.6/6.8 | 4.9/4.7 | 4.0/3.8 |
| 9b. | ROUND | 32 | 25 | 3.05 | 2.95 | HR | CW | 10 | 7.8/9.0 | 5.0/4.4 | 4.2/3.8 |
| 10. | ROUND | 50 | 38 | 4.5 | 3.05 | CW | H | 6 | 4.3/4.3 | 4.3/4.3 | 3.5/3.3 |
| 10a. | ROUND | 50 | 38 | 4.5 | 3.05 | CW | H | 8 | 5.8/4.9 | 4.9/4.8 | 3.8/4.0 |
| 10b. | ROUND | 50 | 38 | 4.5 | 3.05 | CW | II | 10 | 6.2/6.6 | 6.8/5.2 | 4.6/4.4 |
| 11. | ROUND | 39 | 32 | 2.25 | 3.05 | CW | HR | 6 | 5.7/5.5 | 5.7/5.5 | 5.1/4.7 |
| 11a. | ROUND | 39 | 32 | 2.25 | 3.05 | CW | HR | 8 | 7.1/8.5 | 6.9/6.7 | 5.7/6.0 |
| 11b. | ROUND | 39 | 32 | 2.25 | 3.05 | CW | HR | 10 | 7.9/8.6 | 8.3/7.6 | 7.4/6.3 |
| 12. | ROUND | 50 | 39 | 4.5 | 2.25 | CW | CW | 6 | 5.8/5.8 | 5.8/6.0 | 5.0/4.9 |

| SAMPLE NO. | TUBE SHAPE | OUTER DIMENSION OD TUBE | | TUBE WALL THICKNESS | | MATERIAL | | PIN DIA. | INITIAL PEAK (kN) | SUBSEQUENT kN | |
|---|---|---|---|---|---|---|---|---|---|---|---|
| | | (OUTER) | (INNER) | (OUTER) | (INNER) | (OUTER) | (INNER) | | | (MAX) | (MIN) |
| 12a. | ROUND | 50 | 39 | 4.5 | 2.25 | CW | CW | 8 | 8.6/8.9 | 7.5/7.2 | 6.8/6.4 |
| 12b. | ROUND | 50 | 39 | 4.5 | 2.25 | CW | CW | 10 | 9.2/9.4 | 9.3/8.3 | 8.1/7.8 |
| 13. | ROUND | 44.5 | 38 | 3 | 3.05 | CW | H | 6 | 5.0/5.0 | 3.9/4.3 | 3.3/3.3 |
| 13a. | ROUND | 44.5 | 38 | 3 | 3.05 | CW | H | 8 | 6.4/6.4 | 4.4/5.0 | 3.8/4.2 |
| 13b. | ROUND | 44.5 | 38 | 3 | 3.05 | CW | H | 10 | 7.2/6.4 | N/A | N/A |
| 14. | ROUND | 44.5 | 36 | 3 | 3.1 | CW | CW | 6 | 8.0 | 7.3 | 6.7 |
| 14a. | ROUND | 44.5 | 36 | 3 | 2.1 | CW | CW | 8 | 11.1 | 10.4 | 9.2 |
| 14b. | ROUND | 44.5 | 36 | 3 | 2.1 | CW | CW | 10 | 10.9 | N/A | N/A |
| 15. | ROUND | 101.5 | 89 | 5 | 4.5 | CW | CW | ¼" | 12.4/12.9 | 12.2/13.2 | 10.8/12.4 |
| 15a. | ROUND | 101.5 | 89 | 5 | 4.5 | CW | CW | 8 | 15.5/17.5 | 14.6/15.8 | 13.4/13.6 |

EP 0 163 524 B1

| SAMPLE NO. | TUBE SHAPE | OUTER DIMENSION OD TUBE | | TUBE WALL THICKNESS | | MATERIAL | | PIN DIA. | INITIAL PEAK (kN) | SUBSEQUENT kN | |
|---|---|---|---|---|---|---|---|---|---|---|---|
| | | (OUTER) | (INNER) | (OUTER) | (INNER) | (OUTER) | (INNER) | | | (MAX) | (MIN) |
| 15b. | ROUND | 101.5 | 89 | 5 | 4.5 | CW | CW | 10 | 18.8/18.8 | 17.2/18.2 | 13.5/14.0 |
| | | | | | | | | | | | |
| | | | | | | | | | | | |
| | | | | | | | | | | | |
| | | | | | | | | | | | |
| | | | | | | | | | | | |
| | | | | | | | | | | | |
| | | | | | | | | | | | |
| | | | | | | | | | | | |

In the above table "H" and "HR" refer to pultruded tubes whereas "CW" refers to wound tube. A typical specification for pultruded tube "H" is as follows:

Resin Mix:

| Component | % | Weight/m |
|---|---|---|
| Norpol 60—06 | 89.09 | 249.97 |
| Zelec Un | 0.87 | 2.50 |
| Grey Pigment 17199 | 1.74 | 4.88 |
| Hexel HFO 102 | 7.00 | 19.64 |
| Topanol O | 0.10 | 0.28 |
| TBP Octoate | 0.30 | 0.84 |
| TBP Benzoate | 0.90 | 2.53 |

Reinforcement:

| Material | Mass (g/m²) | Width (cm) | No. Off | Mass g/m |
|---|---|---|---|---|
| 6 Ar Woven Roving | 280 | 12 | 2 | 67.2 |
| Uniflo Continuous Filament mat | 450 | 11 | 1 | 49.5 |
| Spun Roving | 2800TEX | — | 32 | 89.6 |
| Mock Spun Roving | 2400TEX | — | 32 | 76.8 |

Percentage of reinforcement = 50.22 by weight
30.10 by volume
Section volume = 3.444E—04 (m³/m)
Total Section mass = 0.563 (kg/m)
Mass of resin/m of section = 0.28 (kg)
Density of section = 1636.69
Optimum pulling speed = 55 cm/min
Resin injection; Machine load-half; No. off die impressions = 1.

The mock spun roving was the outermost layer of reinforcement.

In Samples 1, 2, 6 and 7, load was applied at a steady rate of 50 mm/min. The strut was initially about 600 mm long overall, and the possible reduction of this length was 180 mm. The ends of the tubes were cut square to fit the platens of the test rig. In samples 3, 4 and 5, load was applied at 100 mm/min, whereas for the remaining samples, load was applied at 20 mm/min. In each case, a clearance hole was drilled through both tubes and the appropriate size mild steel bolt inserted into the hole. For the tests on samples 8 to 10, failure was allowed to occur over a distance of about 25 mm starting with the smallest pin size, before the sample was then redrilled and tested in a similar way for successively larger pins.

**Claims**

1. A method of dissipating energy from a moving mass using an energy absorbing device which comprises a sacrificial member of plastics material and a rigid element which has a higher shear strength than said plastics material and which, when a moving mass impinging on the device causes the device to fail, is caused to shear through the sacrificial member, the material of the sacrificial member being chosen such as to ensure that when failure of the device occurs, the mode of failure is by said shearing of the rigid element through the sacrificial member, characterised in that the sacrificial member is of fibre reinforced plastics material forming at least one of a pair of nesting tubes (10, 11) through which a transverse hole (12) is provided, said hole receiving a rigid element (13) of higher shear strength than that of at least one of the tubes whereby the mode of failure is by shearing of the rigid element through at least the said one tube.

2. Apparatus for dissipating energy from a moving mass comprising a sacrificial member (10, 11) of plastics material and a rigid element (13) which has a higher shear strength than said plastics material and which, when a moving mass impinging on the apparatus causes the apparatus to fail, is caused to shear through the sacrificial member, the material of the sacrificial member being chosen such as to ensure that when failure of the device occurs the mode of failure is by said shearing of the rigid element through the sacrificial member, characterised in that the sacrificial member is of fibre reinforced plastics material forming at least one of a pair of nesting tubes (10, 11) through which a transverse hole (12) is provided, said hole receiving a rigid element (13) of higher shear strength than that of at least one of the tubes whereby the mode of failure is by shearing of the rigid element through at least the said one tube.

3. Apparatus as claimed in Claim 2 wherein the reinforcement includes at least some fibres aligned in the intended direction of shear whereby to give said sacrificial material sufficient strength to resist failure in a mode other than by said shearing.

4. Apparatus as claimed in Claim 3 wherein the sacrificial material is produced in a pultrusion process and the intended direction of shear is in the direction of pultrusion.

5. Apparatus as claimed in Claim 4 wherein the reinforcement comprises unidirectional glass fibres.

6. Apparatus as claimed in Claim 2 or Claim 3 wherein the plastics material is produced in a winding process and the reinforcement is in the form of woven cloth.

7. Apparatus according to Claim 2 constituting a telescopic strut having two strut members (10, 11) of which at least one is a sacrificial member, being made of fibre reinforced plastics material, and means to prevent movement of the two members axially in one direction relative to one another, said means comprising a rigid element (13) which is arranged to engage both strut members (10, 11) and which is capable of shearing through the or each sacrificial strut member axially in the said one direction when a load is applied axially to the strut, wherein the material of the or each sacrificial strut member is chosen such as to prevent failure of the strut occurring in a manner other than by said axial shearing of the or each sacrificial strut member.

8. Apparatus as claimed in Claim 6 wherein the reinforcement of the material of the or each sacrificial strut member (10, 11) includes at least some fibres aligned in the intended direction of shear whereby to give the or each sacrificial strut member sufficient strength to resist failure in a mode other than said axial shearing.

9. Apparatus as claimed in any of Claims 2—8 wherein the members (10, 11) are of a cross-section whereby relative rotation between the members is prevented.

10. Apparatus as claimed in any one of Claims 2 to 9 wherein the rigid element comprises a pin or pins (13).

11. Apparatus as claimed in Claim 10 wherein the pin or pins (13) extend transversely of the members (10, 11).

12. Apparatus as claimed in any one of Claims 2 to 11 wherein the material is made in a pultrusion process and the intended direction of shear is in the direction of pultrusion.

13. Apparatus as claimed in Claim 12 wherein the reinforcement comprises unidirectonal glass fibres.

14. Apparatus as claimed in any one of Claims 2 to 11 wherein the material is in the form of woven cloth.

15. Apparatus as claimed in any of Claims 2 to 14 being for axial compressive loads.

## Patentansprüche

1. Verfahren zum Vernichten von Energie einer sich bewegenden Masse unter Benutzung eines Energie absorbierenden Gerätes, welches ein zu opferndes Teil aus Kunststoffmaterial und ein starres Element umfaßt, welches eine höhere Scherfestigkeit als das Kunststoffmaterial besitzt, und das dann, wenn eine sich bewegende, auf das Gerät auftreffende Masse das Gerät zum Versagen veranlaßt, durch das zu opfernde Teil zu scheren veranlaßt wird, wobei das Material des zu opfernden Teiles ausgewählt ist, sicherzustellen, daß bei einem Versagen des Gerätes das Versagen durch das Scheren des starren Elementes durch das zu opfernde Teil geschieht, dadurch gekennzeichnet, daß das zu opfernde Teil aus faserverstärktem Kunststoffmaterial besteht, welches mindestens eines von zwei ineinander gepaßten Rohren (10, 11) bildet, durch welche eine Querbohrung (12) vorgesehen ist, wobei die Bohrung ein starres Element (13) von höherer Scherfestigkeit als des des Mindestens einen Rohres aufnimmt, wodurch die Versagensweise durch das Scheren des starren Elementes durch das mindestens eine Rohr geschieht.

2. Vorrichtung zum Vernichten von Energie einer sich bewegenden Masse mit einem zu opfernden Teil (10, 11) aus Kunststoffmaterial und einem starren Element (13), das eine höhere Scherfestigkeit als das Kunststoffmaterial besitzt und welches dann, wenn eine auf die Vorrichtung autreffende, sich bewegende Masse das Versagen der Vorrichtung verursacht, zum Scheren durch das zu opfernde Tiel veranlaßt wird, wobei das Material des zu opfernden Teils ausgewählt ist, sicherzustellen, daß bei einem Versagen des Gerätes die Versagenweise durch das Scheren des starren Elementes durch das zu opfernde Teil geschieht, dadurch gekennzeichnet, daß das zu opfernde Teil aus faserverstärktem Kunststoffmaterial besteht, welches mindestens eines von einem Paar ineinandergepaßter Rohre (10, 11) bildet, durch welche eine Querbohrung (12) vorgesehen ist, wobei die Bohrung ein starres Element (13) von höherer Scherfestigkeit als der des mindestens einen Rohres aufnimmt, wodurch die Versagenweise durch das Scheren des starren Elementes durch mindestens das eine Rohr geschieht.

3. Vorrichtung nach Anspruch 2, bei der die Verstärkung mindestens einige in der beabsichtigten Scherungsrichtung ausgerichtete Fasern umfaßt, um dadurch dem zu opfernden Material genügend Festigkeit zu verleihen, um ein Versagen in einer anderen Weise als durch das Scheren zu widerstehen.

4. Vorrichtung nach Anspruch 3, bei der das zu opfernde Material mit einem Pultrusions-Vorgang erzeugt wird und die beabsichtigte Scherrichtung in der Pultrusionsrichtung liegt.

5. Vorrichtung nach Anspruch 4, bei der die Verstärkung in einer Richtung ausgerichtete Glasfasern umfaßt.

6. Vorrichtung nach Anspruch 2 oder 3, bei der das Kunststoffmaterial durch einen Wickelvorgang erzeugt wird und die Verstärkung in Form Gewebe vorliegt.

7. Vorrichtung nach Anspruch 2, welche eine teleskopische Stütze mit zwei Stützenteilen (10, 11) bildet, von denen mindestens eines ein zu opferndes Teil ist, welches aus faserverstärktem Kunststoffmaterial besteht, und mit Mitteln zum Verhindern einer Bewegung der beiden Teile axial in einer Richtung gegeneinander, wobei das Mittel ein starres Element (13) umfaßt, welches zum Eingriff mit beiden Stützenelementen (10, 11) angeordnet ist und zum Scheren durch das oder jedes zu opfernde Stützenteil axial in der einen Richtung befähigt ist, wenn eine Last axial auf die Stütze übertragen wird, wobei das Material des oder jedes zu opfernden Stützenteiles so ausgewählt ist, daß es ein Versagen der Stütze in anderer Weise als durch das axiale Scheren durch das oder jedes zu opfernde Stützenteil verhindert.

8. Vorrichtung nach Anspruch 6, bei der die Verstärkung des Materials des oder jedes zu opfernden Strützenteils (10, 11) mindestens einige in der beabsichtigen Scherrichtung ausgerichtete Fasern enthält, um dadurch dem oder jedem zu opfernden Stützenteil ausreichend Festigkeit zu verleihen, um ein Versagen in einer anderen Weise als durch das axiale Scheren zu widerstehen.

9. Vorrichtung nach einem der Ansprüche 2 bis 8, bei der die Teile (10, 11) einen Querschnitt aufweisen, durch welchen eine Relativdrehung der Teile gegeneinander verhindert wird.

10. Vorrichtung nach einem der Ansprüche 2 bis 9, bei der das starre Element einen Stift oder mehrere Stifte (13) umfaßt.

11. Vorrichtung nach Anspruch 10, bei der der Stift oder die Stifte (13) sich in Querrichtung der Teile (10, 11) erstrecken.

12. Vorrichtung nach einem der Ansprüche 2 bis 11, bei der das Material durch einen Pultrusionsvorgang hergestellt ist und die beabsichtigte Scherrichtung die Pultrusionsrichtung ist.

13. Vorrichtung nach Anspruch 12, bei der die Verstärkung in einer Richtung ausgerichtete Glasfasern umfaßt.

14. Vorrichtung nach einem der Ansprüche 2 bis 11, bei der das Material durch einen Wickelvorgang hergestellt wird und die Verstärkung in Form von Gewebe vorliegt.

15. Vorrichtung nach einem der Ansprüche 2 bis 14, für axiale Drucklasten bestimmt.

**Revendications**

1. Procédé pour dissiper de l'énergie d'une masse en mouvement à l'aide d'un dispositif absorbant l'énergie qui comprend un élément sacrificiel en matière plastique et un élément rigide qui présente une résistance au cisaillement supérieur à celle de la matière plastique et qui, lorsqu'une masse en mouvement agissant sur le dispositif force ce dernier à céder, soit amené à cisailler l'élément sacrificiel, la matière de l'élément sacrificiel étant choisie pour assurer que lorsque le dispositif cède, il le fasse par cisaillement de l'élément sacrificiel par l'élément rigide, caractérisé en ce que l'élément sacrificiel est en matière plastique renforcée par des fibres, formant au moins l'un de deux tubes emboîtés l'un dans l'autre (10, 11) et traversés par un trou transversal (12), le trou recevant un élément rigide (13) d'une résistance au cisaillement supérieure à celle d'au moins un des tubes, de sorte que, lorsque le dispositif cède, l'élément rigide cisaille au moins le dit tube moins résistant.

2. Appareil pour dissiper de l'énergie d'une masse en mouvement comprenant un élément sacrificiel (10, 11) en matière plastique et un élément rigide (13) qui présente une résistance au cisaillement supérieure à celle de la matière plastique et qui, lorsqu'une masse en mouvement agissant sur l'appareil force ce dernier à céder, soit amené à cisailler l'élément sacrificiel, la matière de l'élément sacrificiel étant choisie pour assurer que, lorsque le dispositif cède, il le fasse par cisaillement de l'élément sacrificiel par l'élément rigide, caractérisé en ce que l'élément sacrificiel est en matière plastique renforcée par des fibres, formant au moins l'un de deux tubes emboîtés l'un dans l'autre (10, 11) et traversés par un trou transversal (12), le trou recevant un élément rigide (13) d'une résistance au cisaillement supérieur à celle d'au moins un des tubes, de sorte que lorsque le dispositif cède, l'élément rigide cisaille au moins le dit tube moins résistant.

3. Appareil suivant la revendication 2, dans lequel le renforcement comprend au moins certaines fibres alignées dans la direction de cisaillement prévue de manière à conférer à la matière sacrificielle une résistance suffisante pour empêcher l'appareil de céder autrement que par cisaillement.

4. Appareil suivant la revendication 3, dans lequel la matière sacrificielle est produite dans un processus de pultrusion et la direction de cisaillement prévue se situe dans la directon de pultrusion.

9

5. Appareil suivant la revendication 4, dans lequel le renforcement comprend des fibres de verre unidirectionnelles.

6. Appareil suivant la revendication 2 ou 3, dans lequel la matière plastique est produite dans un processus de bobinage et le renforcement a la forme d'un tissu tissé.

7. Appareil suivant la revendication 2, comprenant un étai télescopique comportant deux éléments (10, 11) dont l'un au moins est un élément sacrificiel fait d'une matière plastique renforcée par des fibres, et un moyen pour empêcher les deux éléments de se déplacer axialement dans un sens l'un par rapport à l'autre, ce moyen comprenant un élément rigide (13) qui est en prise avec les deux éléments (10, 11) de l'étai et qui peut cisailler à travers l'élément sacrificiel ou chacun d'eux axialement dans la dite direction lorsqu'une charge est exercée axialement sur l'étai, la matière de l'élément sacrificiel ou de chacun d'eux étant choisie pour éviter que l'étai cède d'une manière autre que par cisaillement axial de l'élément sacrificiel ou de chacun d'eux.

8. Appareil suivant la revendication 6, dans lequel le renforcement de la matière de l'élément d'étai sacrificiel ou de chacun d'eux (10, 11) comprend au moins des fibres alignées dans la direction de cisaillement prévue de manière à conférer à l'élément sacrificiel ou à chacun d'eux, une résistance suffisante pour empêcher l'appareil de céder autrement que par cisaillement axial.

9. Appareil suivant l'une quelconque des revendications 2 à 8, dans lequel les éléments (10, 11) sont d'une section transversale telle qu'ils ne puissent pas tourner l'un par rapport à l'autre.

10. Appareil suivant l'une quelconque des revendications 2 à 9, dans lequel l'élément rigide comprend une ou plusieurs goupilles (13).

11. Appareil suivant la revendication 10, dans lequel la ou les goupilles (13) s'étendent transversalement aux éléments (10, 11).

12. Appareil suivant l'une quelconque des revendications 2 à 11, dans lequel la matière est élaborée dans un processus de pultrusion et la direction de cisaillement prévue se situe dans la direction de pultrusion.

13. Appareil suivant la revendication 12, dans lequel le renforcement comprend des fibres de verre unidirectionnelles.

14. Appareil suivant l'une quelconque des revendications 2 à 11, dans lequel la matière est fabriquée par un processus de bobinage et le renforcement a la forme d'un tissu tissé.

15. Appareil suivant l'une quelconque des revendications 2 à 14, prévu pour des charges de compression axiales.

P

10

12

13

11

P